# EUROPÄISCHE PATENTSCHRIFT

(11) **EP 1 074 998 B1**
(45) Veröffentlichungstag und Bekanntmachung des Hinweises auf die Patenterteilung: **22.10.2003**
(21) Anmeldenummer: 00116667.7
(22) Anmeldetag: 02.08.2000
(51) Int. Cl.: H01B 7/29, H01B 7/295, G02B 6/44

(54) **Hoch temperaturresistentes Kabel und Verfahren zu seiner Herstellung**
High-temperature resistant cable and method of making same
Câble résistant à la chaleur et procédé pour sa fabrication

(30) Priorität: 06.08.1999 DE 29913737 U
(43) Veröffentlichungstag der Anmeldung: 07.02.2001
(73) Patentinhaber: HABIA CABLE GmbH, 40545 Düsseldorf (DE)
(72) Erfinder: Miotk, Thomas, 22397 Hamburg (DE)
(74) Vertreter: WALTHER, WALTHER & HINZ Patentanwälte

(56) Entgegenhaltungen:
- EP-A- 0 224 281
- EP-A- 0 406 477
- DE-A- 4 132 390
- US-A- 4 652 218

## Beschreibung

Die vorliegende Erfindung betrifft ein hoch temperaturresistentes Kabel mit einer elektrisch- oder lichtleitenden Seele, die von einer hoch wärmeisolierenden Hülle umgeben ist und ein Verfahren zu seiner Herstellung.

Derartige Kabel werden beispielsweise in Sicherheitseinrichtungen, wie Fahrstühlen, Notstromaggregaten, usw. eingesetzt, da die Funktionstüchtigkeit dieser Einrichtungen, vor allem im Brandfalle, möglichst lange erhalten werden soll. Derartige Kabel werden auch in der Umgebung von Hochöfen eingesetzt, da auch dort extrem hohe Temperaturen herrschen und eine lange Funktionstüchtigkeit des einzelnen Kabels dessen Wirtschaftlichkeit erhöht. Aufgabe diese Kabels ist es also, selbst bei einer extrem hohen Hitzeentwicklung einen möglichst langen Funktionserhalt zu gewährleisten.

Aus den DE-G 87 16 166.4 und DE-G 87 16 167.2 ist ein temperaturresistentes Kabel bekannt, um dessen Seele flächendeckend ein Glimmerband gewickelt ist. Über dem Glimmerband ist ein Geflecht aus Glasseidefäden gebildet, welches das Glimmerband fest umschließt. Hierdurch wird eine über 400° C temperaturbeständige Isolierung erreicht. Die so isolierte Seele ist dann in ein Metallband eingeschlossen, da im Brandfalle ein nur auf 400° C temperaturbeständiges Kabel nicht ausreichend ist. Durch diese dreischichtige Anordnung verschiedener Isoliermaterialien ist dieses bekannte, temperaturresistente Kabel sehr teuer. Das erforderliche Metallband verringert die Biegsamkeit des Kabeles wenig biegsam, so dass es nur begrenzt verwendbar ist.

Aus der EP 426 190 A2 ist ein hoch temperaturbeständiges Kabel bekannt, dessen Gewebe (Bandierungen oder Geflechte) aus einer aus hochreinem Siliziumdioxid gebildeten Quarzfaser bestehen. Diese Quarzfaser ist bis auf 1.100° C temperaturbeständig und besitzt ein sehr gutes Wärmereflexionsvermögen. Außerdem bildet Quarz bei Temperaturbelastung keinen Rauch und auch keine agressiven Abbauprodukte. Im Brandfalle ist ein nur auf 1.100° C temperaturbeständiges Kabel ebenfalls nicht ausreichend, weshalb die Kombination eines derartigen Quarzgewebes mit weiteren, flammhemmenden Materialien, wie Glimmerbandierungen vorgeschlagen werden.

Aus der DE 35 44 810 A1 ist eine Schutzhülle für strangförmiges Gut bekannt, welche eine das Gut umschließende Glimmerbandage und eine darüber angeordnete Umlegung aus Keramikfäden aufweist.

Aus der DE 197 17 645 A1 ist ein elektrisches Kabel mit Isolations- und Funktionserhalt bekannt, dessen wärmeisolierende Hülle aus einem siliziumorganischen Polymer, einem keramisierbaren Füllstoff und einer schmelzenden und wiedererstarrenden, keramisierbaren, mineralischen Komponente mit niedriger Schmelztemperatur gebildet ist.

Bei Brandversuchen hat keines der hier vorgestellten Kabel in Alleinstellung, das heißt ohne schützende (Metall-) Umhüllung und nicht im Kabelverbund, im Hydrocarbon Test einen Funktionserhalt von mehr als 20 Minuten und im Einheitstemperaturkurven- (ETK-) Test einen Funktionserhalt von mehr als 90 Minuten erreicht.

Aus diesem Grunde werden selbst sogenannte hoch temperaturbeständige oder Sicherheitskabel bisher entweder an Stellen verlegt, an denen keine große Hitzeentwicklung zu erwarten ist oder die Kabel werden in einem schützenden Metallrohr bzw. hinter einer schützenden Metallverkleidung verlegt. Beides ist sehr teuer und erfordert einen hohen konstruktiven Aufwand.

Aus der EP 426 190 A2 ist bekannt, dass Glimmerbandierungen ein sehr gutes Wärmeisolationsvermögen besitzen, jedoch ein inflexibles, blättchenförmiges Material ohne irgendeine Biegbarkeit darstellen. Deshalb werden unter dem Namen "Mika-Tapes" Glimmerbänder angeboten, bei denen der Glimmer mittels nicht temperaturbeständiger, flexibler Bindematerialien wie Epoxyd-Kunststoffen auf dem flexiblen Trägerband gebunden werden. Hierdurch wurde die Glimmerbandierung biegsam. Nachteilig ist jedoch, dass die Epoxyd-Kunststoffe im Brandfalle schnell verbrennen und danach die Glimmerblättchen freisetzen und dass diese Glimmerblättchen ohne Bindemittel keinerlei dynamischer Beanspruchung standhalten und somit einen Funktionserhalt im Brandfalle nicht lange gewährleisten.

Außerdem ist, aus der EP 426 190 A2 bekannt, dass im Isoliermaterial vorhandene Halogene zumindest bei Erhitzung toxisch wirken und andere Materialien, wie beispielsweise Metalle, angreifen. Auch neigen Halogene im Brandfalle zu einer starken Rauchentwicklung, so dass insbesondere in Gebäuden möglichst halogenfrei ausgebildete Kabel eingesetzt werden sollten.

Davon ausgehend liegt der vorliegenden Erfindung die Aufgabe zugrunde, ein Kabel zu schaffen, welches halogenfrei, leicht und biegsam ist und welches im Hydrocarbon-Test einen Funktionserhalt von über 20 Minuten und im ETK-Test einen Funktionserhalt von über 90 Minuten erreicht, und welches kostengünstig herzustellen ist.

Dabei liegt der vorliegenden Erfindung die Erkenntnis zugrunde, dass die aus dem Stand der Technik bekannten wärmeisolierenden Hüllen in der Regel ausreichen, um die Seele vor thermischen Beschädigungen zu schützen, dass im Brandfalle jedoch relativ frühzeitig ein elektrischer Kontakt zwischen der Seele und der Umgebung stattfindet welcher zum Kurzschluss führt.

Darauf aufbauend wird als erste technische Lösung dieser Aufgabe erfindungsgemäß vorgeschlagen, das eingangs genannte Kabel dahingehend weiterzubilden, dass auf der Hülle eine Keramikimprägnierung (15) aufgebrächt ist.

Ein nach dieser technischen Lehre ausgebildetes Kabel hat den Vorteil, dass die Keramikimprägnierung neben den wärmeisolierenden Eigenschaften auch eine elektrisch isolierende Eigenschaft aufweist. Durch seine hohe thermische Beständigkeit wird die keramische werkstoffaufweisende Imprägnierschicht auch bei einer hohen Hitzeeinwirkung für einen langen Zeitraum bestehen bleiben und gewährleistet gleichzeitig eine gute elektrische Isolierung der elektrisch- oder lichtleitenden Seele. Hierdurch wird auch bei hoher Hitzeeinwirkung ein sehr langer Funktionserhalt des Kabels erreicht.

Ein weiterer Vorteil besteht darin, dass sich die hauchdünne, aus Keramikpartikeln zusammensetzende Imprägnierschicht auf der wärmeisolierenden Hülle ausbildet, so dass durch diese dünne Keramikimprägnierung die Biegsamkeit des Kabels nicht wesentlich beeinträchtigt wird. Auch ist eine solche Keramikimprägnierung kostengünstig anzubringen, insbesondere wenn das Kabel gemäß einem der Ansprüche 8 bis 14 hergestellt wird.

In einer bevorzugten Ausführungsform ist die zu imprägnierende Oberfläche der Hülle als eine vorzugsweise aus Siliziumdioxid gebildete Quarzschicht ausgebildet. Dies hat den Vorteil, dass die Keramikpartikel mit dem Quarz, vorzugsweise mit dem Siliziumdioxid, eine Verbindung eingehen und ohne Klebstoff oder anderen Hilfsmitteln haften bleiben. Durch diese Imprägnierung wird eine zusätzliche, elektrisch und thermisch isolierende Schicht aufgebracht, ohne dass die Biegsamkeit des Kabels beeinträchtigt wird. Auch wird durch die hauchdünne Imprägnierung das Gewicht des Kabels nicht wesentlich erhöht, so dass das Kabel gut in beweglichen Bauteilen eingesetzt werden kann.

In einer besonders bevorzugten Ausführungsform ist die hoch wärmeisolierende Hülle aus einem Glimmerband und einer separaten, das Glimmerband umgebenden Quarzschicht, vorzugsweise aus Siliziumdioxid, gebildet. Dies hat den Vorteil, dass im Brandfalle bereits ein Großteil der auftretenden Hitze durch die Quarzschicht abgeleitet wird, so dass am Glimmerband lediglich eine reduzierte Hitze auftritt, bzw. dass bis zum Erreichen der vollen Temperatur beim Glimmerband bereits eine gewisse Zeit verstrichen ist. Hierdurch wird der Funktionserhalt des Kabels deutlich verlängert. Ein weiterer Vorteil besteht darin, dass die geschlossene Quarzschicht den Glimmer zumindest grob in Position hält, so dass dieser nicht verloren geht.

In einer besonders bevorzugten Ausführungsform ist das Glimmerband aus einem Trägerband und einem darauf aufgebrachten Glimmer, vorzugsweise calziniertem Muskovit oder Phlogopit, gebildet, wobei der Glimmer mittels Epoxydharz auf dem Trägerband fixiert ist. Durch das Epoxydharz wird der Glimmer zuverlässig auf dem Trägerband gehalten und kann sich auch nicht beim Biegen des Kabels lösen. Selbst wenn, wie im Stand der Technik beschrieben, das Epoxydharz bei hohen Temperaturen schmilzt oder gar verbrennt, kann der Glimmer nicht entweichen, da er durch die darüber liegende Quarzschicht zumindest grob in Position gehalten wird.

Zum weiteren Schutz der derart isolierten Seele wird auf die Quarzschicht eine Schutzhülle aus halogenfreiem Polyolefin gezogen, die das Kabel gegen mechanische Beschädigungen wie Scheuern usw. schützt. Der Einsatz von halogenfreiem Polyolefin hat dabei den Vorteil, dass im Brandfalle keine große Rauchentwicklung zu erwarten ist und dass keine giftigen Materialien freigesetzt werden.

Als zweite technische Lösung der oben genannten Aufgabe wird erfindungsgemäß vorgeschlagen, das eingangs genannte Kabel dahingehend weiterzubilden, dass auf die Hülle eine einen keramischen Werkstoff aufweisende Flüssigkeit aufgetragen wird, die anschließend getrocknet oder gesintert wird.

Ein nach dieser technischen Lehre ausgebildetes Kabel hat den Vorteil, dass eine derartige Flüssigkeit kostengünstig herzustellen ist und in einfacher Weise auf die wärmeisolierende Hülle aufgetragen werden kann. Die mit Keramikpartikeln angereicherte Flüssigkeit bleibt dabei an der Hülle haften. Anschließend wird die Flüssigkeit getrocknet, so dass lediglich die Keramikpartikel auf der Hülle übrigbleiben und eine elektrisch isolierende Imprägnierung der Hülle bilden.

In einer alternativen Ausführungsform wird die auf die Hülle aufgebrachte, einen keramischen Werkstoff aufweisende Flüssigkeit, insbesondere die Keramikflüssigkeit gesintert. Hierdurch wird ebenfalls die vorhandene Flüssigkeit verdunstet und darüber hinaus werden die Keramikpartikel der Keramikflüssigkeit zu einer Keramikschicht gesintert, so dass auch hierdurch eine zusammenhängende, elektrisch isolierende Imprägnierung der Hülle entsteht.

Des Weiteren findet beim Sintern eine zumindest teilweise Verbindung der Keramikpartikel mit der wärmeisolierenden Hülle, insbesondere mit dem Siliziumdioxid, statt, so dass hierdurch gleichzeitig eine zuverlässige Befestigung der Keramikimprägnierung auf der Hülle erfolgt.

In einer bevorzugten Ausführungsform wird die Hülle durch ein um die Seele gewickeltes Glimmerband und ein um das Glimmerband gewickeltes Quarzgewebeband gebildet, wobei das Glimmerband und/oder das Gewebeband mit einem Überdeckungsgrad von mindestens 50% aufgewickelt werden.

Dies hat den Vorteil, dass durch das separate Aufbringen des Glimmerbandes und der Quarzschicht die Herstellungskosten des Kabels gering gehalten werden können, insbesondere wenn dies in einem Arbeitsgang erfolgt. Durch einen Überdeckungsgrad von mindestens 50% wird gewährleistet, dass das Glimmerband und/oder die Quarzschicht die Seele vollflächig und ohne Lücken aufzuweisen umgibt, so dass eine zuverlässige thermische Isolierung gewährleistet werden kann. In einer anderen, vorteilhaften Weiterbildung kann das Glimmerband auch mehrschichtig um die Seele gewickelt werden, um eine zusätzliche Isolierung zu erreichen.

In einer weiteren, bevorzugten Ausführungsform wird des Glimmerband durch Aufbringen eines Glimmers, vorzugsweise calziniertem Muskovit, auf ein Trägerband gebildet, wobei der Glimmer mittels Epoxydharz auf dem Träger band fixiert wird. Hierdurch kann das Glimmerband in kostengünstiger Weise bereits vor der Fertigung des Kabels hergestellt werden. Der Einsatz von calziniertem Muskovit erleichert die Fertigung und senkt die Fertigungskosten, da dieses Material kostengünstig zu erhalten ist.

In einer weiteren, bevorzugten Ausführungsform, wird das Kabel, einschließlich Glimmerband, Quarzschicht und Keramikimprägnierung als Ganzes gesintert.

Dies hat den Vorteil, dass sich sowohl der auf dem Trägerband befindliche, sich aus kleinsten Partikeln zusammensetzende Glimmer, als auch die einzelnen Fasern des Siliziumdioxids der Quarzschicht, als auch die Keramikpartikel der Keramikimprägnierung zu je einer einheitlichen und flächenhaft verbundenen Schicht verbinden. Hierdurch ist es den auftretenden Flammen, bzw. der auftretenden Hitze, nicht ohne weiteres möglich, die Keramikimprägnierung, die Quarzschicht, bzw. die Glimmerschicht zu durchdringen, so dass ein guter und lange anhaltender Hitzeschutz der Seele gewährleistet ist. Weiterhin bildet die zusammenhängende Keramikimprägnierung eine durchgehende elektrische Isolierung des Kabels, die einen langen Funktionserhalt möglich macht.

Ein weiterer Vorteil besteht darin, dass sich das Siliziumdioxid der Quarzschicht zumindest teilweise mit den Keramikpartikeln verbindet, so dass die Keramikimprägnierung auch bei extremer Hitzeeinwirkung zuverlässig auf der Quarzschicht gehalten wird.

Ein anderer Vorteil des erfindungsgemäßen Kabel liegt darin, dass es wie andere, einfache Kabel verlegt und verarbeitet werden kann.

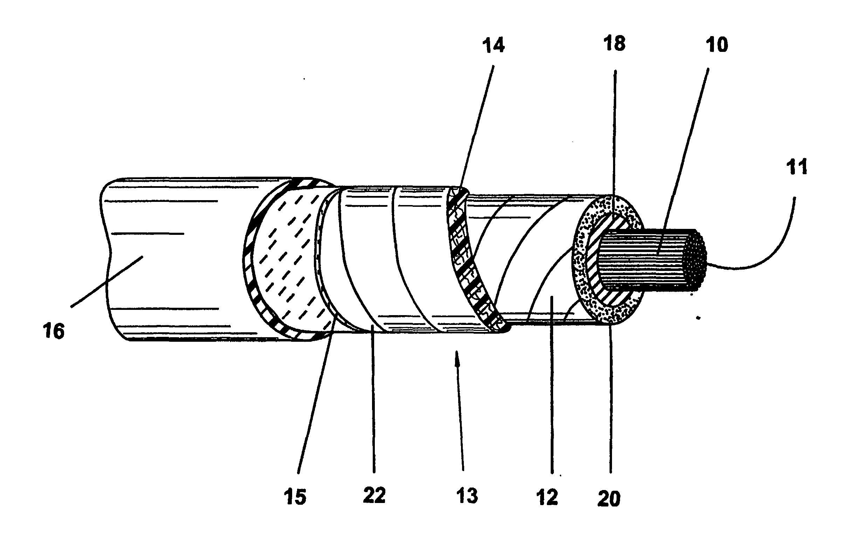

Weitere Vorteile des erfindungsgemäßen Kabels und des erfinderischen Verfahrens ergeben sich aus der beigefügten Zeichnung und den nachfolgend beschriebenen Ausführungsformen. Ebenso können die vorstehend genannten und die noch weiter ausgeführten Merkmale erfindungsgemäß jeweils einzeln oder in beliebigen Kombinationen miteinander verwendet werden. Die erwähnten Ausführungsformen sind nicht als abschließende Aufzählung zu verstehen, sondern haben vielmehr beispielhaften Charakter. Die Figur zeigt ein erfindungsgemäßes Kabel in schematisierter Darstellung mit schichtweise angeordneten Schnitten.

Das in der Zeichnung dargestellte hoch temperaturresistente Kabel setzt sich zusammen aus einer elektrisch leitenden Kupfer-Seele 10 mit einer Vielzahl von Drähten 11, einem um die Seele 10 mit einem Überdeckungsgrad von über 50% gewickelten Glimmerband 12, einer das Glimmerband 12 umgebenden und separat von diesem angeordneten Quarzschicht 14 aus Siliziumdioxid, einer keramische Werkstoffe aufweisenden Keramikimprägnierung 15 und einer Schutzhülle 16 aus einem halogenfreien Polyolefin. Dabei bildet das Glimmerband 12 zusammen mit der Quarzschicht 14 eine hoch wärmeisolierende Hülle 13 der Seele 10.

Das Glimmerband 12 setzt sich aus einem Trägerband 18 und darauf aufgebrachtem Glimmer 20 aus calziniertem Muskovit zusammen, wobei der Glimmer 20 durch handelsübliches Epoxydharz auf dem Trägerband 18 gehalten wird. Statt dem calzinierten Muskovit kann auch Phlogopit eingesetzt werden.

Die Quarzschicht 14 ist aus einem Quarzgewebeband 22 aus Siliziumdioxidfasern gebildet, welche ebenfalls mit einem Überdeckungsgrad von über 50% auf das Glimmerband 12 aufgewickelt ist und somit eine durchgehende und dichte Quarzschicht 14 bildet. Die Keramikimprägnierung 15 ist aus einer eine Vielzahl von Keramikpartikeln aufweisenden Flüssigkeit gebildet, wobei die Keramikflüssigkeit nach dem Auftragen auf die Hülle 13 gesintert wird. Durch das Sintern verflüchtigt sich die Flüssigkeit und die verbleibenden Keramikpartikel verbinden sich mit dem Siliziumdioxid und bilden so eine flexible, elektrisch isolierende und hitzebeständige Schicht.

Abschließend wird auf das so hergestellte Kabel eine Schutzhülle 16 aus halogenfreiem Polyolefin aufgezogen, so dass im Ergebnis ein hoch temperaturresistentes Kabel entsteht, welches ohne weitere schützende Hilfsmittel im Hydrocarbontest einen Funktionserhalt von über 20 Minuten und im ETK-Test einen Funktionserhalt von über 90 Minuten erreicht, wobei das Kabel dennoch kostengünstig herzustellen ist, in großem Maße biegsam ist und ein geringes Eigengewicht aufweist.

Nachfolgend wird das Verfahren zur Herstellung des hoch temperaturresistenten Kabels detailliert beschrieben:

Auf ein Trägerband 18 aus textilem Gewebe wird Glimmer 20 aus calziniertem Muskovit aufgelegt und mit Epoxydharz fixiert. Nachdem das Epoxydharz zumindest angehärtet ist, wird das Glimmerband 12 mit einem Überdeckungsgrad von mehr als 50% auf die Kupfer-Seele 10 aufgewickelt. Anschließend wird ein zu 99,9% aus Siliziumdioxid bestehendes Quarzgewebeband 22 zwecks Imprägnierung in einer Keramikpartikel aufweisenden Flüssigkeit getränkt und ebenfalls mit einem Überdeckungsgrad von über 50% auf das Glimmerband 12 gewickelt. Danach wird die so entstandene hoch wärmeisolierende Hülle 13 und das so gebildete Kabel gesintert, so dass die Flüssigkeit verdunstet und sich die Keramikpartikel zu einer elektrisch isolierenden Keramikimprägnierung 15 verbinden. Alternativ kann die Keramikflüssigkeit auch auf das bereits aufgewickelte Quarzband aufgesprüht werden. Abschließend wird das Kabel mit einer Schutzhülle 16 aus halogenfreiem Polyolefin überzogen.

Es versteht sich, dass zur Keramikimprägnierung jeglicher keramischer Werkstoff eingesetzt werden kann, beispielsweise auch Porzellan oder auch ein anderer, nichtmetallisch-anorganischer Werkstoff.

### Bezugszeichenliste:

- 10: Seele
- 11: Drähte
- 12: Glimmerband
- 13: Hülle
- 14: Quarzschicht
- 15: Keramikimprägnierung
- 16: Schutzhülle
- 18: Trägerband
- 20: Glimmer
- 22: Quarzgewebeband

## Patentansprüche

1. Hoch temperaturresistentes Kabel mit einer elektrisch- oder lichtleitenden Seele (10), die von einer hoch wärmeisolierenden Hülle (13) umgeben ist,
**dadurch gekennzeichnet,**
**dass** auf der Hülle (13) eine Keramikimprägnierung (15) aufgebracht ist.

2. Kabel nach Anspruch 1,
**dadurch gekennzeichnet,**
**dass** die zu imprägnierende Oberfläche der Hülle (13) als eine vorzugsweise aus Siliziumdioxid gebildete Quarzschicht (14) ausgebildet ist.

3. Kabel nach einem der vorangehenden Ansprüche,
**dadurch gekennzeichnet,**
**dass** die hoch wärmeisolierende Hülle (13) aus einem Glimmerband (12) und einer separaten, das Glimmerband (12) umgebenden Quarzschicht (14) gebildet ist.

4. Kabel nach Anspruch 3,
**dadurch gekennzeichnet,**
**dass** das Glimmerband (12) aus einem Trägerband (18) und einem darauf aufgebrachten Glimmer (20) gebildet ist, wobei der Glimmer (20) mittels Epoxydharz auf dem Trägerband (18) fixiert ist.

5. Kabel nach einem der vorangehenden Ansprüche,
**dadurch gekennzeichnet,**
**dass** der Glimmer (12) aus calziniertem Muskovit oder Phlogopit gebildet ist.

6. Kabel nach einem der vorangehenden Ansprüche,
**dadurch gekennzeichnet,**
**dass** das Kabel eine Schutzhülle (16) aus halogenfreiem Polyolefin aufweist.

7. Kabel nach einem der vorangehenden Ansprüche,
**dadurch gekennzeichnet,**
**dass** die Keramikimprägnierung nach einem Verfahren gemäß einem der Ansprüche 8 bis 14 hergestellt ist.

8. Verfahren zur Herstellung eines hoch temperaturresistenten Kabels, bei dem eine elektrisch- oder lichtleitende Seele (10) von einer hoch wärmeisolierenden Hülle (13) umgeben ist,
**dadurch gekennzeichnet,**
**dass** auf die Oberfläche der Hülle (13) eine einen keramischen Werkstoff aufweisende Flüssigkeit, insbesondere eine Keramikflüssigkeit, aufgetragen wird, die anschließend getrocknet oder gesintert wird.

9. Verfahren nach Anspruch 8,
**dadurch gekennzeichnet,**
**dass** die Hülle (13) durch ein um die Seele (10) zu wickelndes Quarzgewebeband (14), vorzugsweise aus Siliziumdioxid, gebildet wird.

10. Verfahren nach einem der Ansprüche 8 bis 9,
**dadurch gekennzeichnet,**
**dass** das Quarzgewebeband (14) in einer einen keramischen Werkstoff aufweisenden Flüssigkeit getränkt wird, bevor es auf das Kabel aufgewickelt wird.

11. Verfahren nach einem der Ansprüche 8 oder 10,
**dadurch gekennzeichnet,**
**dass** die Hülle (13) durch ein um die Seele (10) zu wickelndes Glimmerband (12) und ein um das Glimmerband (12) zu wickelndes Quarzgewebeband (14), vorzugsweise aus Siliziumdioxid, gebildet wird.

12. Verfahren nach einem der Ansprüch 9 oder 11,
**dadurch gekennzeichnet,**
**dass** das Glimmerband (12) und/oder das Gewebeband (14) mit einem Überdeckungsgrad von mindestens 50 % aufgewickelt wird.

13. Verfahren nach einem der Ansprüche 11 bis 12,
**dadurch gekennzeichnet,**
**dass** das Glimmerband (12) durch Aufbringen eines Glimmers (20), vorzugsweise calziniertem Muskovit, auf ein Trägerband (18) gebildet wird, wobei der Glimmer (18) mittels Epoxydharz auf dem Trägerband (18) fixiert wird.

14. Verfahren nach einem der Ansprüche 8 bis 13,
**dadurch gekennzeichnet,**
**dass** das mit dem Glimmerband (12), der Quarzschicht (14) und der keramische Werkstoffe aufweisenden Flüssigkeit versehene Kabel ganzheitlich gesintert wird.

## Claims

1. A high temperature resistant cable with an electrically or light conductive core (10), said core being surrounded with a sheath (13) that has a high thermal insulating capacity,
**characterized in that**
the sheath (13) is impregnated with a ceramic material (15).

2. The cable according to claim 1,
**characterized in that**
the surface of the sheath (13) that is to be impregnated is preferably configured as a quartz layer (14) formed from silicon dioxide.

3. The cable according to one of the afore mentioned claims,
**characterized in that**
the sheath (13), which has a high thermal insulating capacity, is formed from a mica tape (12) and from a separate quartz layer (14) surrounding said mica tape (12).

4. The cable according to claim 3,
**characterized in that**
the mica tape (12) is formed from a carrier tape (18) and from mica (20) disposed thereon, said mica (20) being bonded to the carrier tape (18) by an epoxy resin.

5. The cable according to one of the afore mentioned claims,
**characterized in that**
the mica (12) is formed from calcined muscovite or phlogopite.

6. The cable according to one of the afore mentioned claims,
**characterized in that**
the cable is comprised of a protecting sheath (16) made from halogen free polyolefin.

7. The cable according to one of the afore mentioned claims,
**characterized in that**
the ceramic impregnation is made using a method according to one of the claims 8 through 14.

8. A method of manufacturing a high temperature resistant cable the electrically or light conductive core (10) of which is surrounded with a sheath (13) that has a high thermal insulating capacity,
**characterized in that**
a fluid comprising a ceramic material, more specifically a ceramic fluid, is applied onto the surface of the sheath (13), said fluid being subsequently dried or sintered.

9. The method according to claim 8,
**characterized in that**
the sheath (13) is formed from a fabric tape made of quartz (14), preferably of silicon dioxide, that is to be wrapped around the core (10).

10. The method according to one of the claims 8 through 9,
**characterized in that**,
the fabric tape made of quartz (14) is soaked in a fluid comprising a ceramic material before it is wrapped around the cable.

11. The method according to one of the claims 8 or 10,
**characterized in that**
the sheath (13) is formed from a mica tape (12) that is to be wrapped around the core (10) and from a fabric tape made of quartz (14), preferably of silicon dioxide, that is to be wrapped around the mica tape (12).

12. The method according to one of the claims 9 or 11,
**characterized in that**
the mica tape (12) and/or the fabric tape (14) is wrapped with at least 50 % overlap.

13. The method according to one of the claims 11 through 12,
**characterized in that**
the mica tape (12) is formed by depositing mica (20), preferably calcined muscovite, onto a carrier tape (18), the mica (20) being bonded to the carrier tape (18) by an epoxy resin.

14. The method according to one of the claims 8 through 13,
**characterized in that**
the cable comprising the mica tape (12), the quartz layer (14) and the fluid containing the ceramic materials is sintered in one piece.

## Revendications

1. Câble résistant aux hautes températures avec une âme (10) conductrice d'électricité ou de la lumière, ladite âme étant entourée d'une enveloppe (13) possédant de bonnes propriétés d'isolation thermique,
**caractérisé en ce qu'**
l'enveloppe (13) est imprégnée de céramique (15).

2. Câble selon la revendication 1,
**caractérisé en ce que**
la surface de l'enveloppe (13) destinée à être imprégnée est réalisée sous forme d'une couche de quartz (14) formée de préférence à partir d'un bioxyde de silicium.

3. Câble selon l'une quelconque des revendications précédentes,
**caractérisé en ce que**
l'enveloppe (13) possédant de bonnes propriétés d'isolation thermique est constituée d'un ruban micacé (12) et d'une couche de quartz (14) distincte entourant le ruban micacé (12).

4. Câble selon la revendication 3,
**caractérisé en ce que**
le ruban micacé (12) est formé par un support (18) sur lequel est appliqué le mica (20), ledit mica (20) étant collé sur le support (18) avec de la résine époxy.

5. Câble selon l'une quelconque des revendications précédentes,
**caractérisé en ce que**
le mica (12) est du type muscovite calciné ou phlogopite.

6. Câble selon l'une quelconque des revendications précédentes,
**caractérisé en ce que**
le câble comporte une gaine protectrice (16) en polyoléfine sans halogène.

7. Câble selon l'une quelconque des revendications précédentes,
**caractérisé en ce que**
l'imprégnation céramique est réalisée en utilisant un procédé selon l'une quelconque des revendications 8 à 14.

8. Procédé de fabrication d'un câble résistant aux hautes températures dont l'âme (10) conductrice d'électricité ou de la lumière est entourée d'une enveloppe (13) possédant de bonnes propriétés d'isolation thermique,
**caractérisé en ce qu'**
un liquide comportant un matériau céramique, notamment un liquide céramique, est appliqué sur la surface de l'enveloppe (13) avant d'être séché ou fritté.

9. Procédé selon la revendication 8,
**caractérisé en ce que**
l'enveloppe (13) est formée par un ruban de quartz tissé (14), de préférence de bioxyde de silicium, destiné à envelopper l'âme (10).

10. Procédé selon l'une quelconque des revendications 8 à 9,
**caractérisé en ce qu'**
on imprègne le ruban de quartz tissé (14) d'un liquide comportant un matériau céramique avant d'en envelopper le câble.

11. Procédé selon l'une quelconque dès revendications 8 ou 10,
**caractérisé en ce que**
l'enveloppe (13) est formée par un ruban micacé (12) destiné à envelopper l'âme (10) et par un ruban de quartz tissé (14), de préférence de bioxyde de silicium, destiné à envelopper le ruban micacé (12).

12. Procédé selon l'une quelconque des revendications 9 ou 11,
**caractérisé en ce que**
le ruban micacé (12) et/ou le ruban tissé (14) sont enroulés avec un recouvrement d'au moins 50 %.

13. Procédé selon l'une quelconque des revendications 11 à 12,
**caractérisé en ce que**
le ruban micacé (12) est formé par du mica (20), de préférence du type muscovite calciné, posé sur un support (18), ledit mica (20) étant collé sur le support (18) avec une résine époxy.

14. Procédé selon l'une quelconque des revendications 8 à 13,
**caractérisé en ce que**
le câble pourvu du ruban micacé (12), de la couche de quartz (14) et du liquide comportant les matériaux céramiques est fritté dans son ens.
